# EUROPEAN PATENT APPLICATION

(11) **EP 1 220 176 A2**
(43) Date of publication of application: **03.07.2002**
(21) Application number: 01309043.6
(22) Date of filing: 24.10.2001
(51) Int. Cl.: G07G 1/00, A47F 9/04

(54) **Method and apparatus for operating a self-service checkout terminal to access a customer account**

(30) Priority: 27.12.2000 US 749158
(71) Applicant: NCR INTERNATIONAL INC., Dayton, Ohio 45479 (US)
(72) Inventor: Montani, John Joseph, West Olive, MI 49460 (US)
(74) Representative: Williamson, Brian

(57) **Abstract**

A method of operating a self-service checkout terminal includes the step of generating an item-entered control signal when an item code associated with a item for purchase is entered into the self-service checkout terminal by a user. The method also includes the step of entering a record corresponding to the item for purchase in a transaction table in response to generation of the item-entered control signal. The method yet further includes the step of determining an identification code associated with an RF label imbedded in a user identification device of the user and generating a label-detected control signal in response thereto. In addition, the method includes the step of retrieving payment information included in a user profile associated with the user in response to generation of the label-detected control signal. Yet further, the method includes the step of retrieving retail history information included in the user profile associated with the user in response to generation of the label-detected control signal. Moreover, the method includes the step of performing a user-specific retail function based on the retail history information of the user profile. A self-service checkout terminal is also disclosed.

## Description

The present invention relates generally to a self-service checkout terminal, and more particularly to method and apparatus for operating a self-service checkout terminal to access a customer account.

In the retail industry, the largest expenditures are typically the cost of the goods sold followed closely by the cost of labor expended. With particular regard to the retail grocery or supermarket industry, the impetus to reduce labor costs has focused on reducing or eliminating the amount of time required to handle and/or process the items or goods to be purchased by a customer. To this end, there have been a number of self-service checkout terminal concepts developed which attempt to substantially eliminate the need for a checkout clerk.

A self-service checkout terminal is a system which is operated by a customer without the aid of a checkout clerk. In such a system, the customer scans individual items for purchase across a scanner and then places the scanned item into a shopping bag, if desired. The customer then pays for his or her purchase either at the self-service checkout terminal if so equipped, or at a central payment area which is staffed by a store employee. Thus, a self-service checkout terminal permits a customer to select, itemize, and in some cases pay for his or her purchase without the assistance of the retailer's personnel.

However, it has been found that some customers are intimidated by the use of a self-service checkout terminal. Specifically, it has been noted that in some instances, certain groups of customers find the operation of the terminal to be somewhat intimidating since, amongst other things, the customer is required to follow a number of instructional messages and/or menus displayed on a display screen in order to perform functions such as a payment function or collection and/or redemption of points associated with the retailer's loyalty program. Such functions must be performed by the customer in addition to the functions associated with item entry (e.g. scanning, weighing, and/or identifying of items such as produce).

As a result, certain customers may not embrace the idea of using a self-service checkout terminal. This is particularly undesirable for retailers since the retailer would potentially be put in a situation in which the retailer has already incurred the cost of purchasing the self-service checkout terminals, but yet is still being required to fully staff a number of assisted checkout terminals (i.e. those terminals which are operated by a checkout clerk). A similar problem was presented to the retail automobile fuel industry in that it was found that a number of customers would not utilize the "pay at the pump" feature for fear that improper operation of the pump controls would, for example, cause their credit card to be charged more than once for their purchase. As a result of this, fuel retailer's developed a system by which a customer's credit card information may be accessed when the customer waves or otherwise advances a key chain containing a signal transponder in front of a transceiver device associated with the fuel pump. While such a system works particularly well for fuel retailer's, such a system alone is not well suited for other retail environments such as retail grocery stores since, amongst other things, such grocery operations require access to more information than merely a credit card account number.

Moreover, heretofore designed self-service checkout terminals have also suffered from a lack of flexibility in regard to their design configuration. Specifically, heretofore designed self-service checkout terminals have been generally only utilized as "express" checkout lanes since they have typically been limited to use for small item orders (e.g. ten items or less). As such, these designs have been limited to use in certain types of retail operations (e.g. grocery stores) and are therefore not particularly useful in other types of retail operations. Specifically, many heretofore designed self-service checkout terminals are not particularly well suited for use in retail environments in which a vast majority of the customers utilize shopping carts such as wholesale clubs and the like.

What is needed therefore is a self-service checkout terminal which overcomes one or more of the above-mentioned drawbacks. What is further needed is a self-checkout terminal which provides access to necessary customer account information without requiring a large number of steps to be performed by the customer.

In accordance with one embodiment of the present invention, there is provided a method of operating a self-service checkout terminal. The method includes the step of generating an item-entered control signal when an item code associated with a item for purchase is entered into the self-service checkout terminal by a user. The method also includes the step of entering a record corresponding to the item for purchase in a transaction table in response to generation of the item-entered control signal. The method yet further includes the step of determining an identification code associated with an RF label imbedded in a user identification device of the user and generating a label-detected control signal in response thereto. In addition, the method includes the step of retrieving payment information included in a user profile associated with the user in response to generation of the label-detected control signal. Yet further, the method includes the step of retrieving retail history information included in the user profile associated with the user in response to generation of the label-detected control signal. Moreover, the method includes the step of performing a user-specific retail function based on the retail history information of the user profile.

In accordance with another embodiment of the present invention, there is provided a method of operating a self-service checkout terminal having a signal transceiver and a scanner associated therewith. The method includes the step of generating an item-entered control signal when an item code associated with a item for purchase is scanned with the scanner by a user. The method also includes the step of entering a record corresponding to the item for purchase in a transaction table in response to generation of the item-entered control signal. Moreover, the method includes the step of generating an interrogation signal with the signal transceiver. In addition, the method includes the step of receiving an identification signal which was generated by a transponder associated with an electronic label imbedded in a user identification device of the user in response to generation of the interrogation signal and generating a label-detected control signal in response thereto. The method further includes the step of retrieving payment information included in a user profile associated with the user in response to generation of the label-detected control signal. In addition, the method includes the step of retrieving retail history information included in the user profile associated with the user in response to generation of the label-detected control signal. Yet further, the method includes the step of performing a user-specific retail function based on the retail history information of the user profile.

In accordance with yet another embodiment of the present invention, there is provided a self-service checkout terminal. The terminal includes a transceiver for transmitting an interrogation signal and receiving an identification signal generated with a transponder associated with an electronic label imbedded in a user identification device of a user. The terminal also includes a scanner for allowing the user to scan an item code associated with an item for purchase. Moreover, the terminal includes an output device for performing a user-specific retail function. Yet further, the terminal includes a processing unit electrically coupled to each of the transceiver, the scanner, and the output device. The terminal also includes a memory device electrically coupled to the processing unit. The memory device has stored therein a plurality of instructions which, when executed by the processing unit, causes the processing unit to (a) generate an item-entered control signal when the item code associated with the item for purchase is scanned with the scanner by the user, (b) enter a record corresponding to the item for purchase in a transaction table in response to generation of the item-entered control signal, (c) transmit the interrogation signal with the signal transceiver, (d) receive the identification signal with the signal transceiver if the identification signal is generated by the transponder associated with the electronic label imbedded in the user identification device of the user and generate a label-detected control signal in response thereto, (e) retrieve payment information included in a user profile associated with the user in response to generation of the label-detected control signal, (f) retrieve retail history information included in the user profile associated with the user in response to generation of the label-detected control signal, and (g) perform a user-specific retail function with the output device based on the retail history information of the user profile.

It is therefore an object of the present invention to provide a new and useful self-service checkout terminal.

An embodiment of the present invention will now be described, by way of example, with reference to the accompanying drawings, in which:
FIG. 1 is a perspective view of a self-service checkout terminal which incorporates the features of the present invention therein;
FIG. 2 is a simplified block diagram of the self-service checkout terminal of FIG. 1;
FIG. 3 is a simplified diagram of a user identification card for use with the self-service checkout terminal of FIG. 1;
FIG. 4 is a perspective view of a first alternative configuration of the self-service checkout terminal of FIG. 1; and
FIG. 5 is a perspective views of an additional alternative configuration of the self-service checkout terminal of FIG. 1.

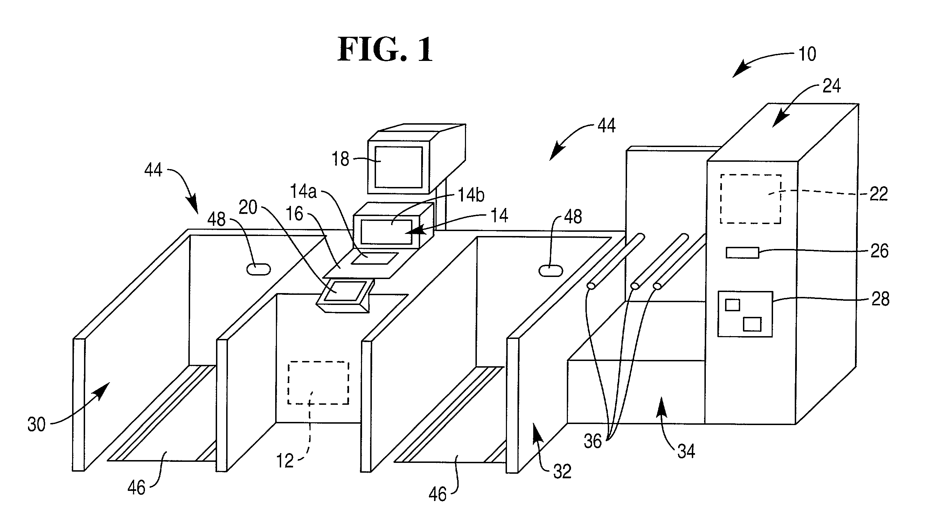

Referring now to FIG. 1, there is shown a self-service checkout terminal 10 for use in a retail business such as a grocery store, wholesale club, or the like. The self-service checkout terminal 10 includes a processing unit 12, a scanner 14, a product scale 16, a display monitor 18, and a data input device 20. The self-service checkout terminal 10 also includes a payment module 24 having a signal transceiver 22, a card reader 26, and a currency acceptor/dispenser 28. The self-service checkout terminal 10 further includes a pair of cart modules 30, 32 and a bagging module 34 for accommodating one or more shopping bags (not shown).

The scanner 14 conventionally scans or reads a product identification code such as a Universal Product Code (UPC), industrial symbol(s), alphanumeric character(s), or other indicia associated with an item to be purchased. One scanner which may be used in the present invention is a model number 7875 bi-optic scanner which is commercially available from NCR Corporation of Dayton, Ohio.

The scanner 14 includes a first scanning window 14a and a second scanning window 14b. The first scanning window 14a is disposed in a substantially horizontal manner, whereas the second scanning window 14b is disposed in a substantially vertical manner, as shown in FIG. 1. The product scale 16 is integrated with the scanner 14. More specifically, the product scale 16 is disposed substantially parallel to the scanning window 14a thereby enveloping the scanning window 14a. If an item such as produce is placed upon the product scale 16 or the first scanning window 14a, the product scale 16 may be used to determine the weight of the item.

The scanner 14 also includes a light source (not shown) such as a laser, a rotating mirror (not shown) driven by a motor (not shown), and a mirror array (not shown). In operation, a laser beam reflects off the rotating mirror and mirror array to produce a pattern of scanning light beams. As the product identification code on an item is passed over the scanner 14, the scanning light beams scatter off the code and are returned to the scanner 14 where they are collected and detected. The reflected light is then analyzed electronically in order to determine whether the reflected light contains a valid product identification code pattern. If a valid code pattern is present, an item-entered control signal is generated and the product identification code is then converted into pricing information which may then be used to determine the cost of the item in a known manner.

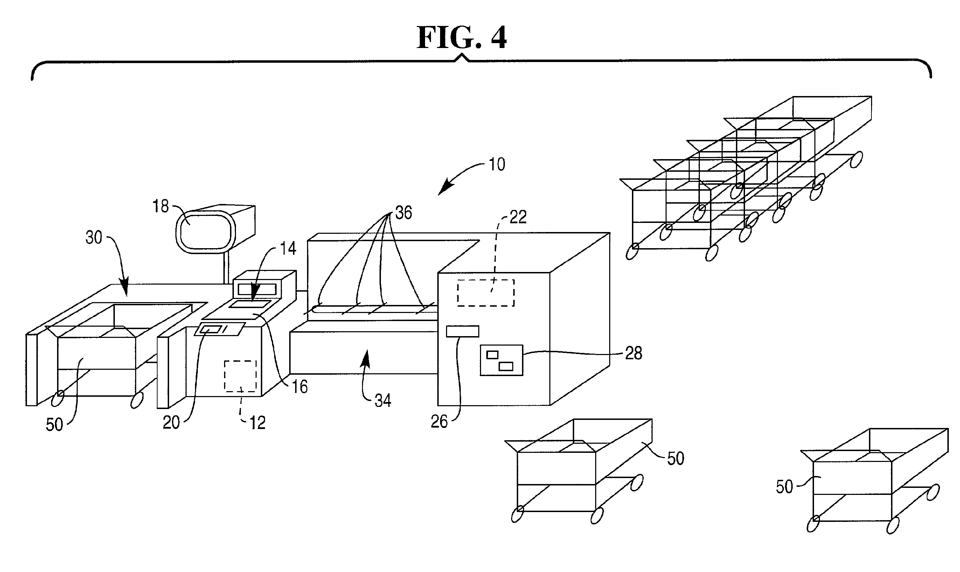

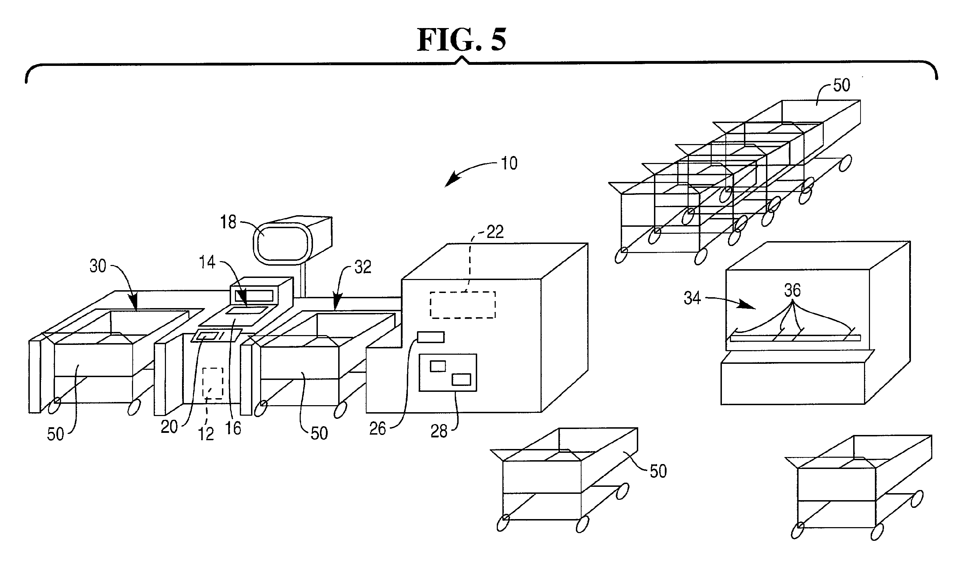

The display monitor 18 displays instructions which serve to guide a customer through a checkout transaction. For example, an instruction is displayed on the display monitor 18 which instructs the customer to remove an item from a grocery cart or trolley 50 (see FIGS. 4 and 5) and pass the item over the scanner 14. If the scanner 14 successfully scans or reads the product identification code associated with the item, a visual indication is generated on the display monitor 18. If for any reason the scanner 14 cannot read or otherwise determine the product identification code associated with the item, a visual error message is generated on the display monitor 18. Moreover, as described in greater detail below, the display monitor 18 may be utilized to display a number of user-specific retail messages such as customized or user-specific advertisement messages. The display monitor 18 may be a known touch screen monitor which generates data signals when certain areas of the screen are touched by a customer.

The bagging module 34 is disposed adjacent to the cart module 32, as shown in FIG. 1. The bagging module 34 includes a number of posts 36 which cooperate to support a number of the shopping bags (not shown). The bagging module 34 is configured to allow two or more shopping bags to be accessed by the customer at any given time. In particular, the posts 36 are of a sufficient length to secure a number of unopened shopping bags along with two or more opened shopping bags thereby allowing a customer to selectively load various item types into the shopping bags. For example, the customer may desire to use a first shopping bag for household chemical items such as soap or bleach, and a second shopping bag for edible items such as meat and produce.

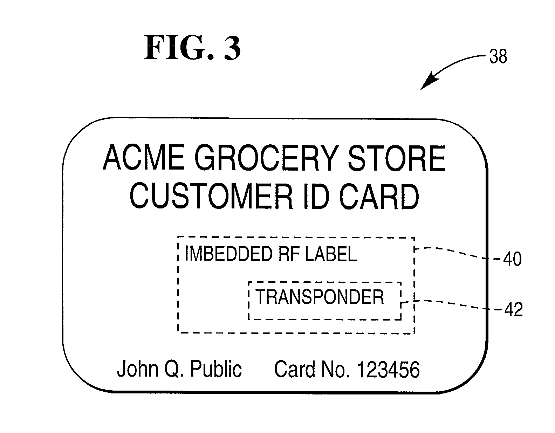

The signal transceiver 22 may include any one of numerous known signal transceivers such as a radio frequency (RF) signal transceiver. The signal transceiver 22 is provided to detect the presence of a customer's user card within a predetermined distance of the self-service checkout terminal 10. In particular, each of the retailer's customers is issued an identification device such as a user identification card 38 (see FIG. 3). The user identification card 38 has an electronic label 40 such as a passive RF label imbedded therein. The passive RF label 40 includes a passive RF transponder 42 which, upon being excited by an RF interrogation signal of a particular frequency, generates an identification signal which includes a unique identification code. Passive RF labels having such RF transponders are well known in the art and are utilized in such applications as garment security tags and automobile identification tags for certain automated toll booths. As will be discussed below in greater detail, the self-service checkout terminal 10 of the present invention senses presence of a particular customer by detecting presence of his or her user identification card 38 and thereafter performs various terminal activities such as payment functions and user-specific retail functions in order to facilitate a customer's checkout transaction.

The cart modules 30, 32 cooperate to define a "cart-to-cart" system 44 which is provided to both facilitate operation of the terminal 10 while also enhancing security from fraud or other improprieties. The cart-to-cart system 44 includes a pad-style cart scale 46 on the floor and a hand-held bar code scanner 48 mounted in each cart booth. Each cart 50 (see FIGS. 4 and 5) has a bar code associated therewith that may be scanned by use of the hand-held scanners 48. The bar code associated with each cart 50 is utilized to determine a tare code associated with each cart 50 which includes the tare weight (i.e. the empty weight) of the cart 50 itself. Such a tare code may either be embedded in the bar code or may be looked up in a database once the bar code is scanned with the hand-held scanner 48.

When a customer pushes a fully loaded cart 50 into one of the cart modules 30, 32, the cart bar code is read by the scanners 48 (either automatically or by operation by the customer) thereby allowing the tare weight of the loaded cart 50 and the tare weight of an empty cart 50 present in the other cart module 30, 32 to be communicated to the processing unit 12. Such a determination of the tare weights of the two carts 50 allows the terminal 10 to ensure that all of the customer's items for purchase are scanned by customer since the terminal 10 may monitor that the item weights of the full cart 50 prior to scanning match the item weights of the full cart 50 after scanning. In the event such item weights do not match, a message will be displayed on the display monitor 18 which prompts the customer for corrective action and/or notify store personnel to assist and/or monitor the customer.

It should be appreciated that in regard to such a cart-to-cart system 44, there would always be one empty cart 50 left by the previous customer in the left or the right cart module 30, 32. Upon arrival at the terminal 10, a customer simply pushes his/her cart 50 into the empty cart module 30, 32 prior to commencement of his or her transaction. It should be further appreciated that, for security or other reasons, the cart modules 30, 32 may be configured to include automatic exit gates (not shown) through which the customer is required to push the cart 50 after payment for his or her items for purchase.

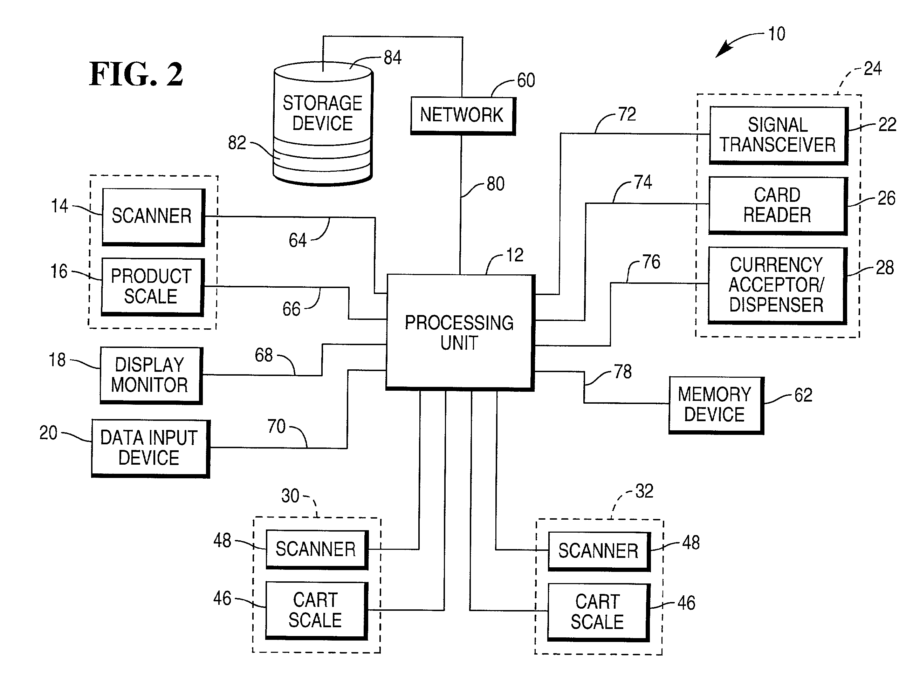

Referring now to FIG. 2, there is shown a simplified block diagram of the self-service checkout terminal 10. The processing unit 12 is electrically coupled to the scanner 14, the product scale 16, the display monitor 18, the data input device 20, the payment module 24, and the cart modules 30, 32. With regard to the payment module 24, each of the signal transceiver 22, the card reader 26, and the currency acceptor/dispenser 28 is electrically coupled to the processing unit 12. Similarly, each of the cart scales 46 and the hand-held scanners 48 of the cart modules 30, 32 is also electrically coupled to the processing unit 12. Unless otherwise described below, each of the aforementioned devices may communicate with the processing unit 12 via any known communication protocol such as a known serial, parallel, or USB communication protocol. Moreover, as shown in FIG. 2, the processing unit 12 is also electrically coupled to a network 60 and a memory device 62.

The processing unit 12 monitors output signals generated by the scanner 14 via a data communication line 64. In particular, the scanner 14 generates an output signal on the data communication line 64 when a bar code associated with an item is successfully scanned or otherwise read by the scanner 14.

The processing unit 12 is coupled to the product scale 16 via a data communication line 66. The product scale 16 generates output signals on the data communication line 66 which are indicative of the weight of an item positioned on the product scale 16.

The processing unit 12 communicates with the display monitor 18 through a data communication line 68. The processing unit 12 generates output signals on the data communication line 68 which cause various messages to be displayed on the display monitor 18. The display monitor 18 may include known touch screen technology which can generate output signals when the customer touches a particular area of the display screen associated with the display monitor 18. The signals generated by the display monitor 18 are transmitted to the processing unit 12 via the data communication line 68. It should be appreciated that throughout the duration of a given checkout procedure, the display monitor 18 may display a message which instructs the customer to either touch a particular key associated with the data input device 20 or touch a particular area of the touch screen associated with the display monitor 18 in order to provide any necessary user input.

The data input device 20 is coupled to the processing unit 12 through a data communication line 70. The data input device 20 may include one or more of a known pin pad, keypad, touch pad which may also include known signature capture capabilities for capturing the signature of the customer during a transaction which requires the same such as a credit transaction.

The processing unit 12 communicates with the signal transceiver 22 through a data communication line 72. The signal transceiver 22 generates an output signal on the data communication line 72 which is indicative of an identification code or other specific information which is unique to a given customer when he or she advances his or her user identification card 38 to within a predetermined distance of the self-service checkout terminal 10. In particular, during operation of the self-service checkout terminal 10, the RF signal transceiver 22 generates a magnetic field in the form of an RF interrogator signal which activates an antenna (not shown) associated with the RF transponder 42 of the RF label 40 imbedded in the customer's user identification card 38. Such activation of the antenna causes the RF transponder 42 to generate and transmit an RF identification signal which includes information associated with the cardholder (e.g. the customer). For example, in one embodiment, the RF identification signal generated by the RF transponder 42 in the customer's user identification card 38 includes an identification code which is unique to the customer. As shall be discussed below in more detail, the self-service checkout terminal 10 may utilize the received identification code to perform a number of terminal functions such as payment functions and user-specific retail functions.

The card reader 26 is coupled to the processing unit 12 through a data communication line 74. The card reader 26 may include a known credit and/or debit card reader and/or a smart card reader.

The currency acceptor/dispenser 28 is coupled to the processing unit 12 through a data communication line 76. The currency acceptor/dispenser 28 may include both a paper currency acceptor/dispenser and a coin acceptor/dispenser thereby enabling the customer to tender payment for his or her purchases with cash (and receive change for the same or "cash back" during debit functions).

As shown in FIG. 2, the processing unit 12 also communicates with the cart scales 46 and the scanners 48 of the cart modules 30, 32 via a number of data communication lines. In such a manner, information associated the weights of the carts 50 positioned on the scales 46 may be communicated to the processing unit 12. Moreover, information associated with the bar code associated with each of the carts 50 may also be communicated to the processing unit 12 once captured by the hand-held scanners 48.

The processing unit 12 communicates with the memory device 62 via a data communication line 78. The memory device 62 is provided to maintain an electronic transaction table which includes a record of the product information associated with each item that is scanned, weighed, or otherwise entered during the customer's use of the self-service checkout terminal 10. For example, if the customer scans a can of soup, an item-entered control signal is generated and the description of the soup and the pricing information associated therewith is recorded in the transaction table in the memory device 62. Similarly, if the customer weighs a watermelon with the product scale 16 and then enters a product lookup code associated with the watermelon via the data input device 20, an item-entered control signal is generated and product information associated with the watermelon is recorded in the transaction table. Moreover, if a customer enters a coupon or voucher, the information associated therewith would also be recorded in the transaction table.

It should therefore be appreciated that the sum of each of the items recorded in the transaction table (1) minus any reductions (e.g. coupons), and (2) plus any applicable taxes is the amount that the customer pays for his or her transaction. Moreover, selected portions of the data stored in the transaction table is printed out on a printer (not shown) associated with the terminal 10 thereby generating a receipt for the customer at the end of his or her transaction.

The processing unit 12 includes network interface circuitry (not shown) which conventionally permits the self-service checkout terminal 10 to communicate with the network 60 such as a LAN or WAN through a wired connection 80. The processing unit 12 communicates with the network 60 during the checkout procedure in order to obtain information such as pricing information of an item being scanned, and also to verify customer credit approval when appropriate. The network interface circuitry associated with the self-service checkout terminal 10 may include a known Ethernet expansion card, and the wired connection 80 may include a known twisted-pair communication line. Alternatively, the network interface circuitry may support wireless communications with the network 60.

The processing unit 12 communicates with the retailer's network 60 in order to access a customer profile database 82 maintained in a network memory device such as a network mass storage device 84 associated with a network central server (not shown). The customer profile database 82 includes a user profile for each customer who has been issued a user identification card 38. Such a user profile includes unique, user-specific retail information associated with each of the customers. For example, when a customer initially applies or otherwise registers for his or her identification card 38, user-specific retail information in the form of demographic information such as the customer's name, address, gender, age, or other demographic information is generally collected on the customer's application. Such user-specific retail information (i.e. demographic information) is included in the customer's profile within the customer profile database 82. It should be appreciated that such demographic information is generally useful to a retailer in determining the buying habits of particular groups of customers. For example, the retailer may desire to know the dollar amount of a particular type of product that the retailer sells to a particular age group. Moreover, the retailer may wish to monitor the home addresses of its customers in order to determine the appropriate advertising range needed in order to adequately reach the retailer's customers.

Moreover, the customer's profile within the customer profile database 82 may also include user-specific payment information such as the customer's debit, credit, or smart card identification and/or numbers, PIN numbers, or other types of approval information. The payment information stored in the customer's profile may include bank routing information to allow the customer's bank account to be accessed directly. Check writing authorization may also be included in the customer's payment information maintained in his or her customer profile. It should be appreciated that in the case of a check, the check may be collected by the cash acceptor/dispenser device 28, or may be tendered to a remote payment area of the retailer's store.

The customer profile stored in the customer profile database 82 of the mass storage device 84 also includes retail history information associated with the customer's previous use of the various terminals throughout the retailer's operation. What is meant herein by the term "retail history information" is information associated with a given customer's previous shopping experiences, transactions, and/or purchases from the retailer's operation. Examples of retail history information include the number of times the customer has shopped in the retailer's store or stores in a given time period (e.g. the previous six months), the dollar amount spent by the customer in a given time period, a list of each of the items purchased by the customer during a given time period, a list of each of the items that the customer inquired about while operating a kiosk or the like within the retailer's store, etcetera. What is meant herein by the phrase "previous use" is a prior retail session by a given customer in which the customer activated or otherwise "logged on" one of the retail devices (e.g. a self-service checkout terminal 10 or other type of checkout terminal, a hand-held electronic shopping assistant, a kiosk, etcetera), completed a retail transaction or inquiry, and thereafter deactivated or otherwise "logged off" the retail device. For example, if a customer checked out his or her items for purchase by use of the self-service checkout terminal 10 during the customer's visit to the retailer's store last week, such previous operation of the terminal 10 would be a previous use by the customer. Moreover, if a customer utilized a hand-held shopping assistant or kiosk to lookup information relating to an item for purchase that the customer was interested in during the customer's visit to the retailer's store last week, such previous use of the hand-held shopping assistant or kiosk would be a previous use by the customer.

Hence, prior to completing a retail checkout transaction with one of the self-service checkout terminals 10, a list of the customer's items for purchase is stored in the customer's profile in the customer profile database 82. Such a list serves as a record of the customer's previous purchases. It should be appreciated that such a list of previous purchases may be utilized in the administration of a customer loyalty program. In particular, an important component of a customer loyalty program is a record of the customer's previous purchasing habits from the retailer's store or stores. Hence, by maintaining an electronic list of the customer's previously purchased items, the retailer may utilize such information in order to reward loyal customers who spend relatively large dollar amounts at the retailer's store, or who purchase items with relatively large profit margins, or who fit any other criteria as established by the retailer.

Access to a given customer's profile in the customer profile database 82 is provided by use of the customer's unique identification code. In particular, as discussed above, the transponder 42 associated with the RF label 40 of the customer's identification card 38 generates a identification signal when the customer's identification card 38 is exposed to the RF interrogation signal generated by the RF transceiver 22 by, for example, waving the card 38 in the general area of the transceiver 22. As indicated above, the identification signal includes, amongst other things, the customer's unique identification code which is transmitted to the processing unit 12 by the RF signal transceiver 22. The processing unit 12 in turn communicates the customer's unique identification code to the server associated with the retailer's network 60 in order to retrieve the corresponding customer profile from the customer profile database 82 maintained on the mass storage device 84. As shall now be discussed in greater detail, the contents of the customer profile is utilized to perform certain customized, user-specific functions with the self-service checkout terminal 10.

For example, the contents of the customer profile may be utilized to perform a payment function. In particular, as discussed above, the customer's user profile may include payment information such as his or her credit or debit card number or banking account number. Once retrieved from the customer profile database 82, a message may be displayed on the display monitor which asks the customer if he or she would like to tender payment for his or her items with the card or account information on file with the store. If so, the customer simply indicates the same by touching a particular area of the touch screen associated with the display monitor 18 or the data input device 20.

Moreover, the retailer may utilize the electronic list of the customer's previously purchased items stored in the customer's user profile in order to perform a user-specific retail function with the self-service checkout terminal 10. What is meant herein by the term "user-specific retail function" is a retail function which is customized for a given customer based on the purchasing habits, demographic information, or some other information which is unique to the customer. For example, the retailer may analyze the customer's electronic list in order to determine a specific item or item-type that the customer frequently purchases. Thereafter, the retailer may then tender to the customer either a paper or electronic (via, for example, a smart card) coupon relating to the specific item or item-type to the customer in order to encourage the customer to purchase additional items. For instance, if the processing unit 12 determines from an analysis of the electronic list stored in the customer's user profile that the customer frequently purchases soda when shopping at the retailer's store, a paper or electronic coupon for soda or a related item (e.g. pretzels) may be tendered to the customer in order to entice the customer to purchase soda or the related item.

As a further example of a user-specific retail function, the retailer may configure the self-service checkout terminal 10 to tender either a paper or electronic gift certificate to the customer based on the analysis of the electronic list stored in the customer's user profile. In particular, if the customer has spent (within a given time period) a dollar amount greater than or equal to a predetermined dollar amount, the retailer may configure the self-service checkout terminal 10 such that a paper or electronic gift certificate is tendered to the customer. Thereafter, the customer may redeem the gift certificate for merchandise from the customer's store during a future visit.

A yet further example of a user-specific retail function includes displaying a customized advertising message on the display monitor 18 of the self-service checkout terminal 10 based on the analysis of the electronic list stored it the customer's user profile. For instance, if the processing unit 12 of the self-service checkout terminal 10 determines from an analysis of the electronic list stored on the customer's user profile that the customer frequently purchases soda when shopping at the retailer's store, an advertising message for soda or a related item (e.g. pretzels) may be displayed on the display monitor 18 of the self-service checkout terminal 10 in order to entice the customer to purchase soda or the related item. It should be appreciated that if the display monitor 18 or other component of the self-service checkout terminal 10 is configured to include audio capabilities, a corresponding audio portion of the advertising message may be played along with the video portion that is displayed on the display monitor 18.

Hence, as described above, by detecting presence of the customer's user identification card 38, the self-service checkout terminal 10 may retrieve user-specific information from the retailer's network 60 related to the customer in order to both (1) provide information to the customer for facilitating the customer's use of the terminal (e.g. his or her payment information such as credit card account number), and (2) customize messages and/or incentives to the customer in order to enable customer-specific marketing strategies to be utilized. As such, the concepts of the present invention not only facilitate the customer's operation of the terminal 10 thereby rendering the customer more likely to utilize the terminal 10 during future visits (as opposed to assisted checkout terminals), but also enable the retailer to improve the retailer's marketing efforts by directing user-specific information to the customer during his or her checkout transaction.

Referring now to FIGS. 4 and 5, there are shown other configurations of the self-service checkout terminal 10. In particular, due to its modular construction, the self-service checkout terminal 10 may be configured in any one of numerous configurations in order to fit the needs of a given retail operation. For example, as shown in FIG. 4, the self-service checkout terminal 10 may be configured as a "scan-and-bag" terminal in which the second cart module 32 has been removed. In such a configuration, the user (e.g. the customer) would conduct a checkout transaction by removing his or her items for purchase from the cart 50 positioned in the cart module 30, scan or otherwise enter the items, and then place the items directly into a shopping bag positioned in the bagging module 34. In such a configuration, the bagging module 34 may be configured with a bag scale (not shown) which measures the weight of the items placed in the bags in order to monitor the security of the customer's operation of the terminal 10 in a manner similar to that described above in regard to the operation of the cart scales 46.

As shown in FIG. 5, the self-service checkout terminal 10 may be further configured to include a remote bagging station 34. In such a configuration, the user (e.g. the customer) would conduct a checkout transaction by removing his or her items for purchase from the cart 50 positioned in the cart module 30, scan or otherwise enter the items, and then place the items in the cart 50 positioned in the cart module 32. Once the customer's transaction is completed, the customer may remove the filled cart 50 from the cart module 32 and thereafter proceed to the remote bagging module 34 in order to remove his or her items for purchase from the cart 50 and place them into shopping bags positioned in the bagging module 34. In such a configuration, throughput through the self-service checkout terminal 10 may be increased since the customer bags his or her items for purchase "offline" thereby allowing the next customer to begin his or her checkout transaction without having to first wait for the customer to bag his or her items for purchase.

In operation, the concepts of the present invention may be utilized to facilitate the user's (e.g. the customer's) operation of the self-service checkout terminal while also providing a customized shopping experience to the customer during his or her checkout transaction. In particular, when the customer arrives at the self-service checkout terminal 10, one or more initialization instructions are displayed on the display monitor 18 which provide general operating instructions to the customer, along with specific instructions as to how the customer may begin the checkout procedure. In particular, instructions are displayed on the display monitor 18 which instruct the customer to wave or otherwise advance his or her user identification card 38 proximate to the payment station (and hence the signal transceiver 22). It should also be appreciated that the detection field of the signal transceiver 22 may be configured to detect presence of the customer's card 38 without requiring the user to wave his or her card 38 (i.e. the transceiver 22 may be configured to detect the presence of the customer's card 38 once it is within a predetermined distance of the self-service checkout terminal 10).

In any event, as the customer approaches the self-service checkout terminal 10, the terminal 10 is operated so as to access the customer's user profile in the customer profile database 82 of the retailer's network 60. As described above, access to a given customer's profile in the customer profile database 82 is provided by use of the customer's unique identification code which is stored in the user's identification card 38. In particular, as discussed in greater detail above, the transponder 42 associated with the RF label 40 of the customer's user identification card 38 generates a identification signal when the customer's identification card 38 is exposed to the RF interrogation signal generated by the RF transceiver 22 by, for example, waving the card 38 in the general area of the transceiver 22. The identification signal includes, amongst other things, the customer's unique identification code which is transmitted to the processing unit 12 by the RF signal transceiver 22. If a discernable identification signal is received by the transceiver 22, a label-detected control signal is generated which causes the processing unit 12, in turn, to communicate the customer's unique identification code to the server associated with the retailer's network 60 in order to retrieve the corresponding customer profile from the customer profile database 82 maintained on the mass storage device 84.

Once the terminal 10 has retrieved the customer's user profile from the retailer's network 60, a user-specific message is displayed on the display monitor 18 which instructs, preferably by name, the customer to enter his or her individual items for purchase into the self-service checkout terminal 10 by use of the scanner 14, the product scale 16, the data input device 20, and/or the touch screen associated with the display monitor 18. At each occurrence of a successful item entry by the customer's operation of either the scanner 14, the product scale 16, the data input device 20, and/or the touch screen associated with the display monitor 18, an item-entered control signal is generated which causes a record of the entered item to be stored in a transaction table maintained by the memory device 62 of the terminal 10 (see FIG. 2).

Once all of the customer's items for purchase have been entered into the terminal 10 in the manner described above, the self-service checkout terminal 10 is operated to perform a finalization function in which the customer tenders payment and a receipt is printed. During such a finalization function, the retrieved payment information from the customer's user profile is displayed on the display monitor 18 in a format which asks the customer if he or she wishes to tender payment for his or her items for purchase by use of the account information (e.g. credit card number) stored in his or her profile. If the customer desires to do so, a payment device such as an electronic funds transfer device utilizes the retrieved payment information (e.g. credit card account number) to secure payment for the customer's transaction.

It should be appreciated that if the customer does not wish to utilize his or her stored payment information, or does not have a user profile with such information, other components associated with the self-service checkout terminal 10 may be utilized to tender payment for his or her items for purchase. For example, the customer may insert currency into the currency acceptor/dispenser 28. The customer may also charge a credit card or debit card account or decrease a value amount stored on a smart card by use of the card reader 26. It should be appreciated that in the case of when a customer inserts currency into the currency acceptor/dispenser 28, the self-service checkout terminal 10 may also provide change via the currency dispensing function of the currency acceptor/dispenser 28.

During such a checkout procedure, the contents of the customer profile is also utilized to perform certain customized, user-specific functions with the self-service checkout terminal 10. For example, the retailer may utilize the electronic list of the customer's previously purchased items stored in the customer's user profile in order to perform a user-specific retail function with the self-service checkout terminal 10. For instance, as discussed above, the retailer may analyze the customer's electronic list in order to determine a specific item or item-type that the customer frequently purchases. Thereafter, the retailer may then tender to the customer either a paper or electronic (via, for example, a smart card) coupon relating to the specific item or item-type to the customer in order to encourage the customer to purchase additional items. For instance, if the processing unit 12 determines from an analysis of the electronic previously purchased item list stored in the customer's user profile that the customer frequently purchases soda when shopping at the retailer's store, a paper or electronic coupon for soda or a related item (e.g. pretzels) may be tendered to the customer in order to entice the customer to purchase soda or the related item.

The retailer may also configure the self-service checkout terminal 10 to tender either a paper or electronic gift certificate to the customer based on the analysis of the electronic list stored in the customer's user profile. In particular, if the customer has spent (within a given time period) a dollar amount greater than or equal to a predetermined dollar amount, the retailer may configure the self-service checkout terminal 10 such that a paper or electronic gift certificate is tendered to the customer. Thereafter, the customer may redeem the gift certificate for merchandise from the customer's store during a future visit.

In addition, during the checkout transaction, a user-specific retail function in the form of a customized advertising message may be displayed on the display monitor 18 of the self-service checkout terminal 10 based on the analysis of the electronic list stored it the customer's user profile. For instance, if the processing unit 12 of the self-service checkout terminal 10 determines from an analysis of the electronic list stored on the customer's user profile that the customer frequently purchases soda when shopping at the retailer's store, an advertising message for soda or a related item (e.g. pretzels) may be displayed on the display monitor 18 of the self-service checkout terminal 10 in order to entice the customer to purchase soda or the related item. It should be appreciated that if the display monitor 18 or other component of the self-service checkout terminal 10 is configured to include audio capabilities, a corresponding audio portion of the advertising message may be played along with the video portion that is displayed on the display monitor 18.

Once the customer has tendered payment for his or her items for purchase, the customer's user profile is updated in the customer profile database 82. Specifically, the customer's user profile is updated to include a list of the items purchased by the customer in order for such information to be available for use by the self-service checkout terminal 10 during a future visit to the store by the customer. Moreover, any other relevant information (e.g. total dollar amount, types of coupons redeemed, answers to any survey questions asked by the checkout terminal 10, etcetera) are also stored in the customer's user profile prior to completion of the checkout transaction. Once the checkout transaction is complete and all desired information has been stored in the customer's user profile, the self-service checkout terminal 10 is idled until initialization thereof by a subsequent customer.

As described herein, the self-service checkout terminal 10 of the present invention provides numerous advantages over heretofore designed terminals. For example, by detecting presence of the customer's user identification card 38, the self-service checkout terminal 10 may retrieve user-specific information from the retailer's network 60 related to the customer in order to both (1) provide information to the customer for facilitating the customer's use of the terminal (e.g. his or her payment information such as credit card account number), and (2) customize messages and/or incentives to the customer in order to enable customer-specific marketing strategies to be utilized. As such, the concepts of the present invention not only facilitate the customer's operation of the terminal 10 thereby rendering the customer more likely to utilize the terminal 10 during future visits (as opposed to assisted checkout terminals), but also enable the retailer to improve the retailer's marketing efforts by directing user-specific information to the customer during his or her checkout transaction.

Moreover, due to its modular design, the self-service checkout terminal 10 may be quickly and easily adapted for use in various different types of retail environments. For example, the self-service checkout terminal 10 is particularly well suited for use in a retail grocery store, but may also be quickly and easily configured for use in other types of retail stores such as wholesale clubs and department stores.

While the invention has been illustrated and described in detail in the drawings and foregoing description, such an illustration and description is to be considered as exemplary and not restrictive in character, it being understood that only the preferred embodiment has been shown and described and that all changes and modifications that come within the spirit of the invention are desired to be protected.

There are a plurality of advantages of the present invention arising from the various features of the checkout terminal described herein. It will be noted that alternative embodiments of the checkout terminal of the present invention may not include all of the features described yet still benefit from at least some of the advantages of such features. Those of ordinary skill in the art may readily devise their own implementations of a checkout terminal that incorporate one or more of the features of the present invention and fall within the spirit and scope of the present invention as defined by the appended claims.

For example, although the retail terminal 10 is herein described as a self-service checkout terminal and has significant advantages thereby in the present invention, certain of such advantages may be realized by incorporating the concepts of the present invention into other types of retail terminals. For example, an assisted checkout terminal (e.g. a terminal which is operated by a checkout clerk or other employee) may be equipped with a signal transceiver so as to allow the customer to provide payment authorization without the need to manually enter an authorization code. Moreover, an output device such as a display monitor associated with such an assisted checkout terminal would be utilized to display the user-specific advertisements and the like.

As a further example, although the identification device is herein described as the user identification card 38, and has significant advantages thereby in the present invention, it should be appreciated that certain of such advantages may be achieved by use of other types of identification devices. For example, the identification device may include a key chain or the like which has the RF label 40 imbedded therein.

Modifications may be incorporated without departing from the scope of the present invention.

## Claims

1. A method of operating a self-service checkout terminal, comprising the steps of:
generating an item-entered control signal when an item code associated with a item for purchase is entered into said self-service checkout terminal by a user;
entering a record corresponding to said item for purchase in a transaction table in response to generation of said item-entered control signal;
determining an identification code associated with an RF label imbedded in a user identification device of said user and generating a label-detected control signal in response thereto;
retrieving payment information included in a user profile associated with said user in response to generation of said label-detected control signal;
retrieving retail history information included in said user profile associated with said user in response to generation of said label-detected control signal; and
performing a user-specific retail function based on said retail history information of said user profile.

2. A method as claimed in claim 1, wherein said determining step includes the steps of:
generating an RF interrogation signal with an RF transceiver associated with said self-service checkout terminal,
generating an RF identification signal which includes said identification code with an RF transponder associated with said RF label imbedded in said user identification device of said user in response to generation of said RF interrogation signal, and
receiving said RF identification signal with said RF transceiver associated with said self-service checkout terminal.

3. A method as claimed in claim 1, wherein:
said self-service checkout terminal is electrically coupled to a network memory device via a network,
said payment information retrieving step includes the step of retrieving said payment information included in said user profile associated with said user from said network memory device via said network, and
said retail history information retrieving step includes the step of retrieving said retail history information included in said user profile associated with said user from said network memory device via said network.

4. A method as claimed in any preceding claim, wherein said step of performing said user-specific retail function based on said retail history information included in said user profile includes the step of generating a user-specific retail message.

5. A method as claimed in claim 4, wherein said step of generating said user-specific retail message includes the step of printing a user-specific voucher with a printer associated with said self-service checkout terminal.

6. A method as claimed in any preceding claim, wherein said RF label imbedded in said user identification device of said user includes a passive RF label.

7. A self-service checkout terminal, comprising:
a transceiver for (i) transmitting an interrogation signal, and (ii) receiving an identification signal generated with a transponder associated with an electronic label imbedded in a user identification device of a user;
a scanner for allowing said user to scan an item code associated with an item for purchase;
an output device for performing a user-specific retail function;
a processing unit electrically coupled to each of said transceiver, said scanner, and said output device; and
a memory device electrically coupled to said processing unit, wherein said memory device has stored therein a plurality of instructions which, when executed by said processing unit, causes said processing unit to:
(a) generate an item-entered control signal when said item code associated with said item for purchase is scanned with said scanner by said user,
(b) enter a record corresponding to said item for purchase in a transaction table in response to generation of said item-entered control signal,
(c) transmit said interrogation signal with said signal transceiver,
(d) receive said identification signal with said signal transceiver if said identification signal is generated by said transponder associated with said electronic label imbedded in said user identification device of said user and generate a label-detected control signal in response thereto,
(e) retrieve payment information included in a user profile associated with said user in response to generation of said label-detected control signal,
(f) retrieve retail history information included in said user profile associated with said user in response to generation of said label-detected control signal, and
(g) perform a user-specific retail function with said output device based on said retail history information of said user profile.

8. A self-service checkout terminal as claimed in claim 7, further comprising a payment device, wherein said plurality of instructions, when executed by said processing unit, further causes said processing unit to operate said payment device so as to tender payment for said item for purchase based on said payment information.

9. A self-service checkout terminal as claimed in claim 7 or claim 8, further comprising a communication device for electrically coupling said self-service checkout terminal to a network memory device via a network, wherein said plurality of instructions, when executed by said processing unit, further causes said processing unit to operate said communication device so as to retrieve said payment information and said retail history information included in said user profile associated with said user from said network memory device via said network.

10. A self-service checkout terminal as claimed in claims 7 to 9, wherein:
said output device includes a display monitor, and
said plurality of instructions, when executed by said processing unit, further causes said processing unit to display a user-specific advertisement on said display monitor based on said retail history information.

11. A self-service checkout terminal as claimed in claim 8, wherein:
said output device includes a printer, and
said plurality of instructions, when executed by said processing unit, further causes said processing unit to print a user-specific voucher with said printer based on said retail history information.
